# EUROPÄISCHE PATENTSCHRIFT

(11) **EP 0 633 128 B1**
(45) Veröffentlichungstag und Bekanntmachung des Hinweises auf die Patenterteilung: **23.09.1998**
(21) Anmeldenummer: 94107298.5
(22) Anmeldetag: 10.05.1994
(51) Int. Cl.: B29C 65/42, B29C 65/54, F16B 3/00, F16C 13/00

(54) **Verfahren zur Erhöhung der Querbelastbarkeit von mechanischen Verbindungen**
Process to increase the shear loading capacity of mechanical connections
Procédé pour augmenter la tenue des liaisons mécaniques aux efforts de cisaillement

(30) Priorität: 08.07.1993 DE 4322724
(43) Veröffentlichungstag der Anmeldung: 11.01.1995
(73) Patentinhaber: Voith Sulzer Papiermaschinen GmbH, 89509 Heidenheim (DE)
(72) Erfinder: Link, Christoph, D-88250 Weingarten (DE)
(74) Vertreter: Finsterwald, Manfred, Dipl.-Ing., Dipl.-Wirtsch.-Ing.

(56) Entgegenhaltungen:
- DE-A- 3 638 179
- FR-A- 1 062 874
- FR-A- 1 164 445
- FR-A- 1 560 179
- GB-A- 1 389 819

## Beschreibung

Die Erfindung betrifft ein Verfahren zur Erhöhung der Querbelastbarkeit von mechanischen Verbindungen zwischen zwei Teilen nach dem Oberbegriff von Anspruch 1 bzw. Anspruch 2.

Treten quer zum Verbindungselement gerichtete Kräfte auf, so war es bisher üblich, diesen durch eine entsprechende Gestaltung der Verbindungsflächen oder durch eine Erhöhung der Anzahl von Verbindungselementen entgegenzuwirken, was die Herstellungskosten erheblich steigert. Dies gilt insbesondere beim Anbringen von Keilen oder passgenauen Stiften.

Aus der FR-A-1062874 ist ein Verfahren zum Verbinden von Ritzeln und Wellen bekannt, bei dem in die Welle eine Umfangsnut und in die der Welle zugewandte Verbindungsfläche des Ritzels wenigstens eine transversal zur Ritzelachse verlaufende Ausnehmung gefräst wird. Im zusammengesetzten Zustand ist der von der Nut und der Ausnehmung begrenzte Hohlraum von außen über einen sich in Längsrichtung durch die Welle erstreckenden Kanal und einen davon ausgehenden Querkanal zugänglich. Zur Fixierung des Ritzels auf der Welle wird über die Kanäle ein aufgeweichtes oder flüssiges Material wie beispielsweise natürliches oder künstliches Harz in den Hohlraum eingebracht, welches anschließend aushärtet.

Die FR-A-1164445 betrifft ein Verfahren zum Verbinden von zwei Teilen, die beide aus Holz bestehen, die beide jeweils als Rohr ausgebildet sind oder von denen eines ein Holzteil und das andere ein Rohr ist. Bei diesem bekannten Verfahren wird zunächst in einem der beiden Teile ein Füllraum ausgebildet, in den anschließend aushärtbares Kunststoffmaterial eingebracht wird. Der Füllraum wird entweder von einer Ausnehmung in dem Holzteil oder von einer kleinen Röhre gebildet, die mit zur Rohrachse senkrechter Längsachse in das Rohr eingesetzt wird. Das freie Ende eines mit dem anderen Teil verbundenen Elements wird dann in den mit Kunststoffmaterial gefüllten Füllraum eingetaucht. Nach dem Festwerden des Kunststoffmaterials ist die gewünschte Verbindung zwischen den beiden Teilen hergestellt.

Aus der FR-A-1560179 ist es bekannt, miteinander zu verbindende Teile jeweils mit einer Ausnehmung zu versehen und die Teile dann so anzuordnen, daß die beiden Ausnehmungen zusammen einen von außen unmittelbar zugänglichen, kanalartigen Hohlraum bilden, in den anschließend ein schnell aushärtendes flüssiges Material injiziert oder gepreßt wird.

Der Erfindung liegt die Aufgabe zugrunde, ein Verfahren zur Gewährleistung einer ausreichenden Querbelastbarkeit von mechanischen Verbindungen zwischen zwei Teilen zu schaffen, das mit geringem Herstellungsaufwand verbunden ist, größere Toleranzen erlaubt und möglichst die Lösbarkeit der Verbindung zuläßt.

Erfindungsgemäß wurde die Aufgabe durch die in den Ansprüchen 1 und 2 beschriebenen Verfahren gelöst, wobei die Unteransprüche besondere Ausführungsformen darstellen.

Besonders geeignet ist dieses Verfahren, wenn eines der zu verbindenden Teile aus einem weichen Material, beispielsweise Kunststoff und das andere Teil aus einem harten Material, wie zum Beispiel Metall besteht. Ein spezieller Anwendungsfall wird bei vorwiegend aus Kunststoff bestehenden Walzenmänteln gesehen, die über je eine seitliche Abdeckung aus Metall mit dem zentralen Träger zu verbinden sind. Die dabei infolge des vom Drehantrieb des Trägers ausgehenden und auf den Walzenmantel zu übertragenden Drehmomentes zwischen der Abdeckung und dem Walzenmantel auftretenden Querkräfte erfordern besondere erfindungsgemäße Maßnahmen.

Bei der Variante gemäß Anspruch 2 ist es von Vorteil, wenn das Element aus einem harten Material, wie beispielsweise Metall besteht und in das harte zu verbindende Teil gesteckt oder geschraubt wird. Einerseits erhöht das Element die Querbelastbarkeit, andererseits gewährleistet der das Element innerhalb der Aussparung umgebende Kunststoff eine ausreichende Nachgiebigkeit und damit eine Schonung des weichen Teiles. Für die Schaffung einer Verbindung zum aufgefüllten Kunststoff empfiehlt es sich, wenn die Elemente an dem in die Aussparung ragenden Ende zumindest eine Verdickung aufweisen.

Bei beiden Verfahren sind verschiedene Gestaltungsformen der Aussparungen je nach Anwendungsfall sowie der zu erwartenden Belastungsrichtung und -stärke möglich. Insbesondere dann, wenn die Verbindung leicht lösbar sein soll, ist es vorteilhaft, wenn die Aussparungen die Form eines senkrecht zur Verbindungsfläche angeordneten Zylinders oder Konusses haben, dessen Querschnittsfläche sich zur Verbindungsfläche hin vergrößert.

Soll die Verbindung nicht lösbar sein, so ist es denkbar, daß sich die Querschnittsfläche der Aussparungen zur Verbindungsfläche hin verkleinert und somit zur Verstärkung der Verbindung senkrecht zu den Verbindungsflächen beigetragen wird. Es ist natürlich auch möglich, verschiedene Gestaltungsformen der Aussparungen zu kombinieren, so daß beispielsweise gewährleistet ist, daß das aufgefüllte und ausgehärtete Kunststoffteil beim Lösen der Verbindung nur in einem Teil festgehalten wird.

Für die Lösbarkeit der Verbindungen ist es weiterhin von Vorteil, zumindest einen Teil der Aussparungen vor dem Ausfüllen mit einem Trennmittel zu benetzen.

Die ausgehärteten Kunststoffteile können, sofern die Verbindung lösbar ist, zur Positionierung bei einer Wiedermontage verwendet werden.

Die Belastbarkeit des Kunststoffes kann wesentlich durch Beimengungen aus Fasern, Metallteilen o.ä. vergrößert werden. Es kann dabei erforderlich sein, daß diese Stoffe bzw. Teile schon vor dem Verbinden in die Aussparungen eingebracht werden.

Nachfolgend soll die Erfindung an mehreren Ausführungsbeispielen näher erläutert werden. In der beigefügten Zeichnung zeigen:
- Fig. 1: Teilschnitte einer Walze und
- Fig. 2-5: Gestaltungsformen einer Verstärkung der Querbelastbarkeit.

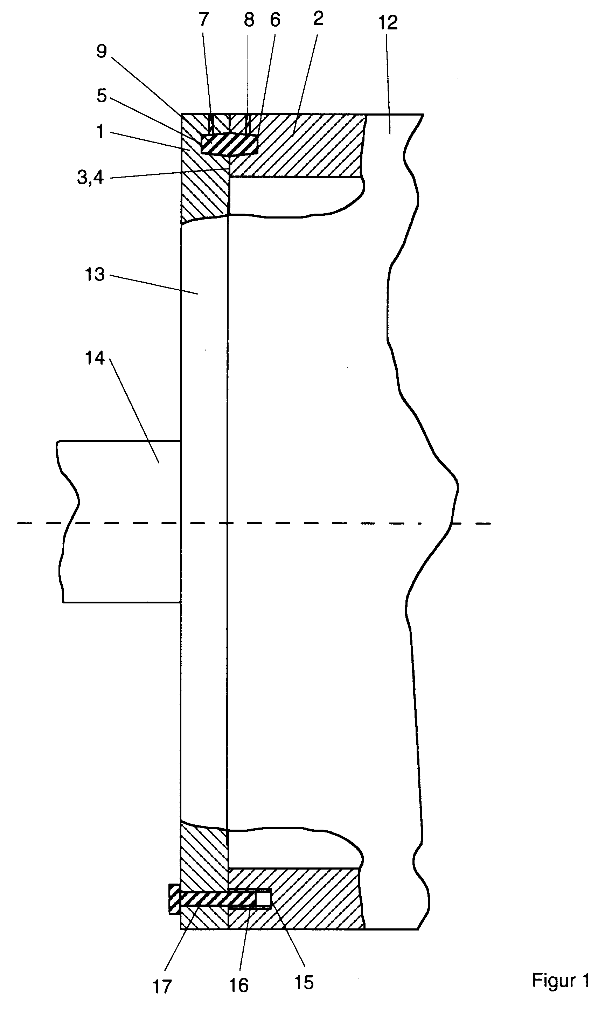

Die in Fig. 1 dargestellte Walze besteht im wesentlichen aus einem Träger 14, einer seitlichen Abdeckung 13 aus Metall und einem Walzenmantel 12 aus einem flexiblen Kunststoff. Die Verbindung zwischen der Abdeckung 13 und dem Walzenmantel 12 erfolgt auch hier üblicherweise über Schrauben 17 und entsprechende in eine Bohrung 15 des Walzenmantels 12 befestigte Gewindeeinsätze 16. Um ein ausreichendes Drehmoment vom Träger 14 bzw. der Abdeckung 13 auf den Walzenmantel 12 übertragen zu können, kann es erforderlich werden, die Querbelastbarkeit der Verbindung zwischen der Abdeckung 13 und dem Walzenmantel 12 zu erhöhen.

Dies wird gemäß Fig. 1 und Anspruch 1 dadurch erreicht, daß verteilt an den Verbindungsflächen 3, 4 des Walzenmantels 12 sowie der Abdeckung 13 vorzugsweise zwischen den Schraubverbindungen Aussparungen 5 und 6 angeordnet werden, die die Form eines senkrecht zur Verbindungsfläche 3, 4 angeordneten Konusses haben, dessen Querschnittsfläche sich zur Verbindungsfläche 3, 4 hin vergrößert. Dabei befindet sich eine Aussparung 5 der Abdeckung 13 jeweils gegenüber einer Aussparung 6 des Walzenmantels 12 und werden die Aussparungen 5, 6 mit je einem innerhalb des jeweiligen Teiles 1,2 verlaufenden sowie nach außen führenden Kanal 7, 8 versehen.

Sofern die Abdeckung 13 mit Hilfe der Schrauben 17 am Walzenmantel 12 befestigt ist, besteht nunmehr die Möglichkeit, die gegenüberliegenden Aussparungen 5, 6 über einen Kanal 7 mit einem Kunststoff 9 auszufüllen. Aus dem anderen Kanal 8 kann dabei die Luft aus den Aussparungen 5, 6 entweichen. Der Kunststoff 9 kann in Pastenform oder im flüssigen Zustand eingebracht werden. Das Entweichen der Luft kann natürlich auch über den zum Auffüllen vorgesehenen Kanal 7 ermöglicht werden, so daß die Notwendigkeit eines zweiten Kanales 8 entfällt.

Nach dem Aushärten des Kunststoffes 9 ist eine ausreichende Querbelastbarkeit der Verbindung gegeben. Diese Maßnahme ist nicht nur mit wenig Aufwand verbunden, sondern schont auch das Material des Walzenmantels 12.

Um die Lösbarkeit der Verbindung zu verbessern, sollte zumindest eine der Aussparungen 5 und 6 vor dem Ausfüllen mit Kunststoff 9 mit einem Trennmittel beschichtet werden.

Sollte danach eine Wiedermontage erfolgen, so können die Teile aus dem Kunststoff 9 die Positionierung erleichtern.

Zur Erhöhung der Belastbarkeit des Kunststoffes 9 ist es außerdem möglich, dem Kunststoff 9 Fasern, Metallteile o.ä. beizumengen.

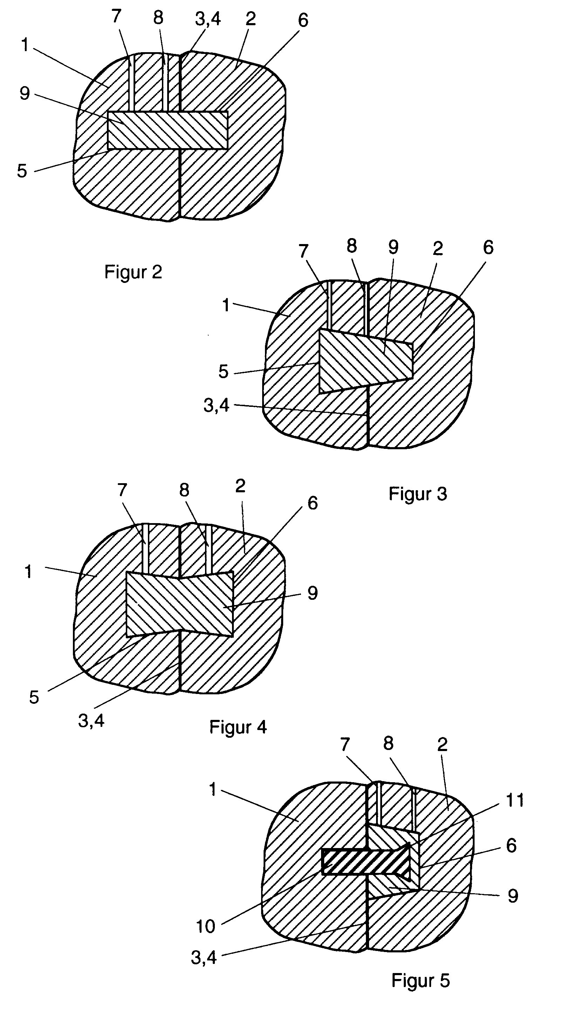

Die Fig. 2 bis 4 zeigen verschiedene Gestaltungsformen der Aussparungen 5, 6 mit den dazugehörigen Kanälen 7, 8.

Die Aussparungen 5,6 gemäß Fig. 2 haben die Form eines senkrecht zur Verbindungsfläche 3, 4 angeordneten Zylinders, wobei nur die Aussparung 5 des Teiles 1 mit zwei innerhalb des Teiles 1 nach außen verlaufenden Kanälen 7, 8 versehen ist.

Die Fig. 3 deutet auf die Möglichkeit hin, verschiedene Formen von Aussparungen 5, 6 zu kombinieren. In diesem Fall weisen zwar beide Aussparungen 5, 6 die Form eines senkrecht zur Verbindungsfläche 3, 4 verlaufenden Konusses auf, aber während sich die Querschnittsfläche der Aussparung 5 zur Verbindungsfläche 3 hin verkleinert, vergrößert sich die der Aussparung 6 zur Verbindungsfläche 4 hin. Dies bietet den Vorteil, daß das Teil aus dem Kunststoff 9 beim Lösen der Verbindung vom Teil 1 bzw. dessen Aussparung 5 gehalten wird und zur späteren Positionierung verwendbar ist. Auch hierbei besitzt nur die Aussparung 5 zwei Kanäle 7, 8, wobei allerdings nur ein Kanal 7 innerhalb des Teiles 1 verläuft.

Bei dem Beispiel gemäß Fig. 4 haben die Aussparungen ebenfalls eine konische Form. Im Unterschied zu Fig. 3 verringert sich aber die Querschnittsfläche bei beiden Aussparungen 5, 6 zur Verbindungsfläche 3, 4 hin. Diese Gestaltung läßt ein Lösen der Verbindung nur schwer oder gar nicht zu und trägt somit zur Verstärkung der Verbindung senkrecht zu den Verbindungsflächen bei. Es ist auch denkbar, daß ausschließlich diese Elemente aus dem Kunststoff 9 die Verbindung zwischen den Teilen 1 und 2 schaffen. Hierbei besitzt beispielhaft jede Aussparung 5, 6 je einen im jeweiligen Teil nach außen verlaufenden Kanal 7, 8.

In Fig. 5 ist eine Gestaltungsform entsprechend dem Verfahren gemäß Anspruch 2 dargestellt. Dabei sind an der Verbindungsfläche 3 des Teiles 1 Elemente 10 in Form von Stiften aus Metall befestigt, vorzugsweise eingeschraubt. Gegenüber diesen Stiften befinden sich Aussparungen 6 mit zwei innerhalb des Teiles 1 nach außen verlaufenden Kanälen 7, 8. Die Aussparungen 6 haben in diesem Beispiel die Form eines senkrecht zur Verbindungsfläche 4 verlaufenden Konusses, dessen Querschnittsfläche sich zur Verbindungsfläche 4 hin vergrößert. Nach dem Verbinden der Teile 1 und 2 ist es dadurch möglich, die Aussparungen 6 mit dem Kunststoff 9 über den Kanal 7 auszufüllen. Um den Kunststoff 9 am Stift zu fixieren, ist es von Vorteil, wenn dieser an dem in die Aussparung 6 ragenden Ende eine Verdickung 11 aufweist.

## Patentansprüche

1. Verfahren zur Erhöhung der Querbelastbarkeit von mechanischen Verbindungen zwischen zwei Teilen (1, 2) mit sich berührenden Verbindungsflächen (3, 4), bei dem die Verbindungsflächen (3, 4) mit mindestens je einer Aussparung (5, 6) versehen werden, wobei sich eine Aussparung (5) eines Teils (1) jeweils überdeckend gegenüber einer Aussparung (6) des anderen Teils (2) befindet, und die jeweils gegenüberliegenden Aussparungen (5, 6) mit zusammen mindestens einem nach außen führenden Kanal (7, 8) versehen werden, über den diese Aussparungen (5, 6) mit einem flüssigen oder pastenförmigen sowie aushärtbaren Kunststoff (9) ausgefüllt werden,
dadurch **gekennzeichnet,**
daß eines der zu verbindenden Teile (1) aus einem harten Material und das andere Teil (2) aus einem weichen Material besteht, und daß die beiden Teile (1, 2) durch die mechanischen Verbindungen gegeneinander verspannt werden.

2. Verfahren zur Erhöhung der Querbelastbarkeit von mechanischen Verbindungen zwischen zwei Teilen (1, 2) mit sich berührenden Verbindungsflächen (3, 4), bei dem die Verbindungsfläche (4) des einen Teils (2) mit einer Aussparung (6) versehen wird, wobei die Aussparung (6) mit mindestens einem nach außen führenden Kanal (7) versehen wird, über den die Aussparung (6) mit einem flüssigen oder pastenförmigen sowie aushärtbaren Kunststoff (9) ausgefüllt wird,
dadurch **gekennzeichnet,**
daß an der Verbindungsfläche (3) des anderen Teils (1) gegenüber der Aussparung (6) mindestens ein Element (10) befestigt wird, welches aus dieser Fläche ragt, das mit dem Element (10) versehene Teil (1) aus einem harten Material und das mit der Aussparung (6) versehene Teil (2) aus einem weichen Material besteht, und die beiden Teile (1, 2) durch die mechanischen Verbindungen gegeneinander verspannt werden.

3. Verfahren nach Anspruch 2,
**dadurch gekennzeichnet**,
daß die Elemente (10) aus einem harten Material, vorzugsweise Metall bestehen.

4. Verfahren nach Anspruch 2 oder 3,
**dadurch gekennzeichnet**,
daß das mit den Elementen (10) versehene Teil (1) aus einem harten Material, vorzugsweise Metall besteht.

5. Verfahren nach einem der Ansprüche 2 bis 4,
**dadurch gekennzeichnet**,
daß die Elemente (10) an dem in die Aussparung (6) ragenden Ende zumindest eine Verdickung (11) aufweisen.

6. Verfahren nach einem der Ansprüche 1 bis 5,
**dadurch gekennzeichnet**,
daß dem Kunststoff (9) Fasern, Metallteile oder ähnliche, die Belastbarkeit erhöhende Stoffe beigemengt werden.

7. Verfahren nach Anspruch 6,
**dadurch gekennzeichnet**,
daß die beizumengenden Stoffe bzw. Teile vor dem Füllen mit Kunststoff (9) in die Aussparungen (5, 6) eingebracht werden.

8. Verfahren nach einem der Ansprüche 1 bis 7,
**dadurch gekennzeichnet**,
daß die Aussparungen (5, 6) die Form eines senkrecht zur Verbindungsfläche (3, 4) angeordneten Zylinders haben.

9. Verfahren nach einem der Ansprüche 1 bis 7,
**dadurch gekennzeichnet**,
daß die Aussparungen (5, 6) die Form eines senkrecht zur Verbindungsfläche (3, 4) angeordneten Konusses haben, dessen Querschnittsfläche sich zur Verbindungsfläche (3, 4) hin vergrößert.

10. Verfahren nach einem der Ansprüche 1 bis 7,
**dadurch gekennzeichnet**,
daß sich die Querschnittsfläche der Aussparungen (5, 6) zur Verbindungsfläche (3, 4) hin verkleinert.

11. Verfahren nach einem der Ansprüche 1 bis 10,
**dadurch gekennzeichnet**,
daß mindestens eine der Aussparungen (5, 6) vor dem Ausfüllen mit Kunststoff (9) mit einem Trennmittel benetzt wird.

12. Verfahren nach einem der Ansprüche 1 bis 11,
**dadurch gekennzeichnet**,
daß eines der zu verbindenden Teile (1) aus, Kunststoff und das andere Teil (2) aus Metall besteht.

13. Verfahren nach Anspruch 12,
**dadurch gekennzeichnet**,
daß ein Teil (2) als vorwiegend aus Kunststoff bestehender Walzenmantel (12) ausgebildet ist und das andere Teil (1) aus Metall besteht und in Form einer seitlichen Abdeckung (13) des Walzenmantels (12) die Verbindung zum Antrieb des Walzenmantels (12) herstellt.

## Claims

1. Method of increasing the transverse loadability of mechanical connections between two parts (1, 2) with contacting connection surfaces (3, 4), in which the connection surfaces (3, 4) are each provided with at least one cut-out (5, 6), wherein a cut-out (5) of one part (1) is respectively coveringly located opposite to a cut-out (6) of the other part (2) and the respectively oppositely disposed cut-outs (5, 6) are together provided with at least one passage (7, 8) leading outwardly, via which these cut-outs (5, 6) can be filled out with a liquid or pasty and also curable plastic (9), characterized in that one of the parts (1) to be connected consists of a harder material, and the other part (2) of a softer material, and in that the two parts (1, 2) are clamped against one another by the mechanical connections.

2. Method of increasing the transverse loadability of mechanical connections between two parts (1, 2) having contacting connection surfaces (3, 4), wherein the connection surface (4) of the one part (2) is provided with a cut-out (6), with the cut-out (6) being provided with at least one outwardly leading passage (7), by which the cut-out (6) is filled out with a liquid or pasty and also hardenable plastic (9), characterized in that at least one element (10) is secured to the connection surface (3) of the other part (1) opposite to the cut-out (6) and projects out of this surface, the part (1) provided with the element (10) consists of a hard material, and the part (2) provided with the cut-out (6) consists of a soft material, and the two parts (1, 2) are clamped against one another by the mechanical connections.

3. Method in accordance with claim 2, characterized in that the elements (10) consist of a hard material, preferably metal.

4. Method in accordance with claim 2 or claim 3, characterized in that the part (1) provided with the elements (10) consists of a hard material, preferably metal.

5. Method in accordance with one of the claims 2 to 4, characterized in that the elements (10) have at least one thickened portion (11) at the end projecting into the cut-out (6).

6. Method in accordance with one of the claims 1 to 5, characterized in that fibres, metal parts, or similar materials which increase the loadability are admixed to the plastic (9).

7. Method in accordance with claim 6, characterized in that the admixed materials or parts are introduced into the cut-outs (5, 6) prior to the filling with plastic (9).

8. Method in accordance with one of the claims 1 to 7, characterized in that the cut-outs (5, 6) have the shape of a cylinder arranged perpendicular to the connection surface (3, 4).

9. Method in accordance with one of the claims 1 to 7, characterized in that the cut-outs (5, 6) have the form of a cone arranged perpendicular to the connection surface (3, 4), with the cross-sectional area of the cone increasing towards the connection surface (3, 4).

10. Method in accordance with one of the claims 1 to 7, characterized in that the cross-sectional area of the cut-outs (5, 6) reduces towards the connection surface (3, 4)

11. Method in accordance with one of the claims 1 to 10, characterized in that at least one of the cut-outs (5, 6) is wetted with a parting agent prior to the filling out with plastic (9).

12. Method in accordance with one of the claims 1 to 11, characterized in that one of the parts (1) to be connected consists of plastic and the other part (2) of metal.

13. Method in accordance with claim 12, characterized in that one part (2) is formed as a roll jacket (12) consisting predominantly of plastic and the other part (1) consists of metal and, in the form of a lateral cover (13) of the roll jacket (12), produces the connection to the drive of the roll jacket (12).

## Revendications

1. Procédé destiné à augmenter la capacité de charge transversale de liaisons mécaniques entre deux pièces (1, 2) par des surfaces de liaison (3, 4) se touchant, selon lequel chacune des surfaces de liaison (3, 4) est munie d'au moins un évidement (5, 6), un évidement (5) d'une pièce (1) étant à chaque fois situé de façon à coïncider avec un évidement (6) de l'autre pièce (2), et les évidements (5, 6) situés respectivement l'un en face de l'autre comportant au moins un canal (7, 8) débouchant à l'extérieur, par l'intermédiaire duquel ces évidements (5, 6) sont remplis avec une matière plastique (9) liquide ou pâteuse, et également durcissable,
caractérisé en ce que
l'une des pièces (1) à relier est constituée d'un matériau dur et l'autre pièce (2) d'un matériau tendre, et en ce que les deux pièces (1, 2) sont contraintes l'une par rapport à l'autre par les liaisons mécaniques.

2. Procédé destiné à augmenter la capacité de charge transversale de liaisons mécaniques entre deux pièces (1, 2) par des surfaces de liaison (3, 4) se touchant, selon lequel la surface de liaison (4) de l'une des pièces (2) est munie d'un évidement (6), l'évidement (6) étant muni d'au moins un canal (7) débouchant à l'extérieur, par l'intermédiaire duquel l'évidement (6) est rempli avec une matière plastique (9) liquide ou pâteuse, et également durcissable,
caractérisé en ce que
au moins un élément (10) est fixé en face de l'évidement (6) sur la surface de liaison (3) de l'autre pièce (1), lequel fait saillie de cette surface, en ce que la pièce (1) munie de l'élément (10) est constituée d'un matériau dur et la pièce (2) munie de l'évidement (6) d'un matériau tendre, et en ce que les deux pièces (1, 2) sont contraintes l'une par rapport à l'autre par les liaisons mécaniques.

3. Procédé selon la revendication 2,
caractérisé en ce que
les éléments (10) sont constitués à partir d'un matériau dur, de préférence à partir de métal.

4. Procédé selon la revendication 2 ou 3,
caractérisé en ce que
la pièce (1) munie des éléments (10) est constituée à partir d'un matériau dur, de préférence à partir de métal.

5. Procédé selon l'une quelconque des revendications 2 à 4,
caractérisé en ce que
les éléments (10) comportent un épaississement (11), au moins au niveau de l'extrémité qui pénètre dans l'évidement (6).

6. Procédé selon l'une quelconque des revendications 1 à 5,
caractérisé en ce que
des fibres, des particules métalliques ou des matières analogues augmentant la capacité de charge sont ajoutées à la matière plastique (9).

7. Procédé selon la revendication 6,
caractérisé en ce que
les matières ou particules à ajouter sont introduites dans les évidements (5, 6) avant le remplissage de la matière plastique (9).

8. Procédé selon l'une quelconque des revendications 1 à 7,
caractérisé en ce que
les évidements (5, 6) ont la forme d'un cylindre disposé perpendiculairement aux surfaces de liaison (3, 4).

9. Procédé selon l'une quelconque des revendications 1 à 7,
caractérisé en ce que
les évidements (5, 6) ont la forme d'un cône disposé perpendiculairement aux surfaces de liaison (3, 4), dont la surface en section transversale s'agrandit en direction des surfaces de liaison (3, 4).

10. Procédé selon l'une quelconque des revendications 1 à 7,
caractérisé en ce que
la surface en section transversale des évidements (5, 6) se réduit en direction des surfaces de liaison (3, 4).

11. Procédé selon l'une quelconque des revendications 1 à 10,
caractérisé en ce que
l'un au moins des évidements (5, 6) est mouillé par un agent de séparation avant le remplissage avec de la matière plastique (9).

12. Procédé selon l'une quelconque des revendications 1 à 11,
caractérisé en ce que
l'une des pièces (1) à relier est en matière plastique et l'autre pièce (2) en métal.

13. Procédé selon la revendication 12,
caractérisé en ce que
une pièce (2) est réalisée en tant qu'enveloppe (12) de cylindre constituée principalement de matière plastique, et en ce que l'autre pièce (1) est en métal et établit la liaison vers l'entraînement de l'enveloppe (12) du cylindre sous la forme d'un recouvrement latéral (13) de l'enveloppe (12) du cylindre.
